# EUROPÄISCHE PATENTANMELDUNG

(11) **EP 1 894 495 A1**
(43) Veröffentlichungstag der Anmeldung: **05.03.2008**
(21) Anmeldenummer: 07017232.5
(22) Anmeldetag: 03.09.2007
(51) Int. Cl.: A47D 11/00, A63H 33/00, B62B 7/12

(54) **Spielbox-Satz**

(30) Priorität: 04.09.2006 DE 202006013648 U
(71) Anmelder: Degenhardt, Florian, 33803 Steinhagen (DE)
(72) Erfinder: Degenhardt, Florian, 33803 Steinhagen (DE)
(74) Vertreter: Müller, Frank

(57) **Zusammenfassung**

Die Erfindung betrifft einen Spielbox-Satz in der Form eines im wesentlichen würfelförmigen Kastens, der aus zwei offenen Kastenhälften (10.12) zusammengesetzt ist, bei denen bei der ersten Kastenhälfte (10) die Seitenwände vom Rand her bogenförmig ausgespart sind, während bei der zweiten Kastenhälfte (12) zwei gegenüberliegende Seitenwände bogenförmig vorspringend ausgeführt sind, derart, dass beim Zusammensetzen der Kastenhälften (10,12) die bogenförmigen Ausnehmungen (16,18,20,22) und Vorsprünge (39,40) einander ergänzen.

## Beschreibung

Die Erfindung betrifft einen Spielbox-Satz in der Form eines im wesentlichen würfelförmigen Kastens, der aus zwei offenen Kastenhälften zusammengesetzt ist, bei denen bei der ersten Kastenhälfte die Seitenwände vom Rand her bogenförmig ausgespart sind, während bei der zweiten Kastenhälfte zwei gegenüberliegende Seitenwände bogenförmig vorspringend ausgeführt sind, derart, dass beim Zusammensetzen der Kastenhälften die bogenförmigen Ausnehmungen und Vorsprünge einander ergänzen.

Eine derartige Spielbox kann zum einen zur Aufnahme weiterer Spielelemente dienen. Als derartige Spielelemente kommen beispielsweise offene, quaderförmige Kästen in Betracht, von denen zwei etwas höhere und zwei etwas niedrigere paarweise neben- und übereinander so in die erfindungsgemäße Spielbox eingesetzt werden können, dass sie deren Innenraum vollständig ausfüllen.

Vorzugsweise ist der Radius der bogenförmigen Vorsprünge an den Seitenwände der zweiten Kastenhälfte und der bogenförmigen Ausnehmungen der ersten Kastenhälfte kleiner als die halbe Seitenlänge des Kastens.

Auf diese Weise erstrecken sich beiderseits der bogenförmigen Ausnehmungen die Reste der Seitenwände der ersten Kastenhälfte bis zum ursprünglichen Rand der Seitenwände. Auf diese Weise kann die erste Kastenhälfte beim Spielen als Tisch verwendet werden, der an allen vier Seiten Stützbögen aufweist.

Weiter vorzugsweise weist der Boden der die bogenförmigen Ausschnitte aufweisenden ersten Kastenhälfte einen in Abstand zu den Rändern verlaufenden rechteckigen Ausschnitt auf, der durch eine einlegbare Platte verschließbar ist.

In einer bevorzugten Ausführungsform weist der Deckel auf einer seiner Seiten eine labyrinthartig verlaufende Nut auf.

Auf der Außenseite eines der bogenförmigen Vorsprünge einer Seitenwand der zweiten Kastenhälfte sind kreisförmige Markierungen vorgesehen. Aufgrund ihrer Geometrie bieten die beiden Kastenhälften für Kinder verschiedene Einsatzmöglichkeiten beim spielen, wie später näher erläutert werden soll.

Die beiden Kastenhälften können aus einem relativ dünnen, plattenförmigen Material, beispielsweise aus Sperrholz oder Kunststoff bestehen. Scharfe Kanten und Ecken sollten vermieden werden, damit keine Verletzungsgefahr besteht.

Die zweite Kastenhälfte weist vorzugsweise an den beiden nicht mit Vorsprüngen versehenen Seitenwänden Ausnehmungen auf, die den bogenförmigen Ausnehmungen der ersten Kastenhälfte entsprechen.

Weiter vorzugsweise ist eine der beiden Kastenhälften an zumindest zwei gegenüberliegenden Kantenbereichen mit Rollen versehen.

Diese Rollen können vorzugsweise abnehmbar an den Kantenbereichen angebracht sein.

In einer bevorzugten Ausführungsform wird jeweils eine Rolle drehbar in einem Lagerbock gehalten, der einen etwa L-förmigen Querschnitt mit zwei Schenkeln aufweist, von denen ein erster Schenkel plattenförmig ausgebildet ist und zu der Seite des Lagerbocks weist, die der Rolle abgewandt ist, während der zweite Schenkel ein Lager umfaßt, in welchem die Drehachse der Rolle einliegt.

Die Drehachse erstreckt sich vorzugsweise senkrecht zur Erstreckungsrichtung des zweiten Schenkels durch diesen hindurch und liegt im Lager axial verschiebbar ein, und das Lager umfaßt ein Federelement, das die Drehachse in Richtung der Seite des zweiten Schenkels vorspannt, die der Rolle abgewandt ist.

Vorzugsweise ragt auf dem plattenförmigen ersten Schenkel mindestens ein Zapfen auf.

Im folgenden werden bevorzugte Ausführungsbeispiele anhand der beigefügten Zeichnung näher erläutert.
- Fig. 1: ist eine perspektivische Darstellung einer erfindungsgemäßen Spielbox in geschlossener Stellung;
- Fig. 2: ist eine Explosionsdarstellung einer erfindungsgemäßen Spielbox;
- Fig. 3: ist eine perspektivische Darstellung der ersten Kastenhälfte als Tisch und der beiden Kästen als Bänke zur Bildung einer für Spielzwecke geeigneten Sitzgruppe;
- Fig. 4: veranschaulicht, wie aus den Teilen des Spielbox-Satzes ein Kasperle-Theater gebildet werden kann;
- Fig. 5: zeigt die Verwendung zur Bildung eines Kaufmannsladens;
- Fig. 6: ist eine weitere perspektivische Darstellung der beiden aufeinander gestellten Kastenhälften;
- Fig. 7: zeigt, wie aus der ersten Kastenhälfte und dem in diese hineingesetzten zweiten Kasten eine Schulbank gebildet werden kann, während die auf die Seitenfläche gestellte zweite Kastenhälfte in der dargestellten Art und Weise ein Schulpult bilden soll;
- Fig. 8: zeigt, wie aus der zweiten Kastenhälfte, die wiederum auf eine der Seitenwände gelegt worden ist, und den beiden Kästen, die in der dargestellten Art und Weise in die offene Seite der zweiten Kastenhälfte hineingesetzt worden sind, ein Puppenherd gebildet werden kann;
- Fig. 9: zeigt eine aus den Kästen sowie den Kastenteilen gebildete Treppe;
- Fig. 10: zeigt die zweite Kastenhälfte mit nach oben offener Seite auf dem Boden;
- Fig. 11 und 12: zeigen Ansichten des Deckels der Spielbox senkrecht und schräg von unten;
- Fig. 13: ist eine perspektivische Ansicht einer Rolleneinheit zur Anbringung an der erfindungsgemäßen Spielbox;
- Fig. 14: zeigt die Rolleneinheit aus Fig. 13 in einer Seitenansicht;
- Fig. 15: ist eine Explosionsdarstellung der Rolleneinheit aus Fig. 13;
- Fig. 16 bis 18: sind schematische Darstellungen zur Erläuterung der Montage einer Rolleneinheit an der Spielbox;
- Fig. 19 bis 22: zeigen eine mit Rollen versehene Kastenhälfte in einer Spielfunktion als Karussell.

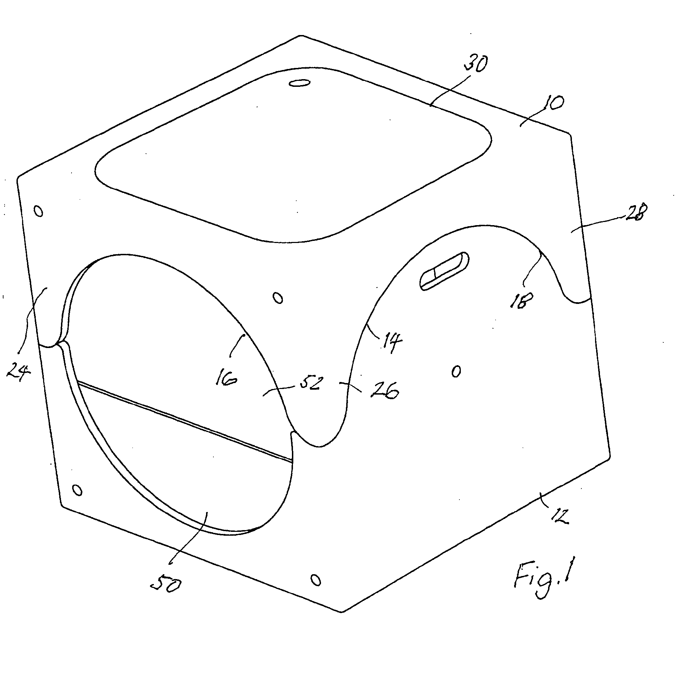

Fig. 1 zeigt in perspektivischer Ansicht eine Darstellung einer erfindungsgemäßen Spielbox in geschlossenem Zustand. Erkennbar sind zwei zusammengesetzte Kastenhälften 10 und 12, die als erste und zweite Kastenhälfte bezeichnet werden sollen. Die beiden Kastenhälften weisen übereinstimmende, komplementäre Randverläufe 14 auf. Der durch die beiden Kastenhälften 10 und 12 gebildete Kasten ist im wesentlichen würfelförmig. Dabei kommt es nicht auf eine exakte Würfelform an. Die Würfelkanten können zur Vermeidung von Verletzungsgefahren weich ausgerundet sein.

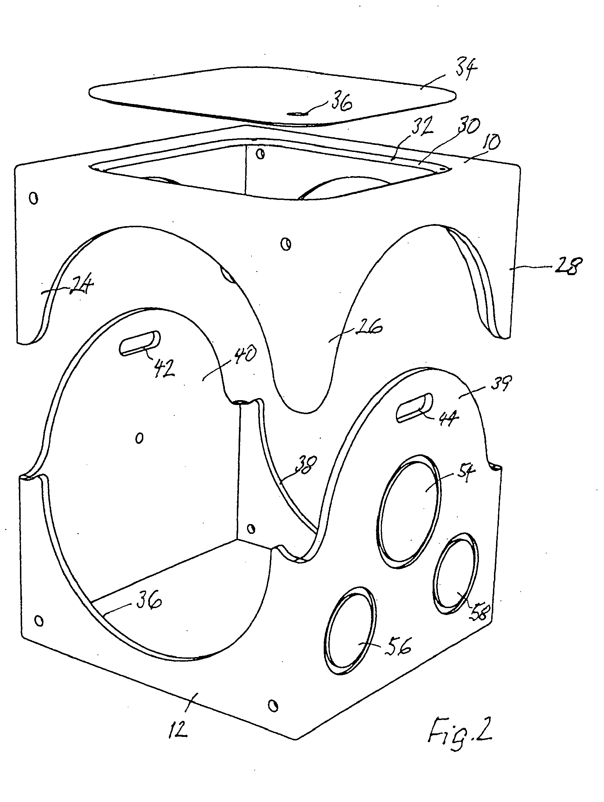

Die in Fig. 1 und ebenso Fig. 2 oben liegende erste Kastenhälfe 10 weist an allen vier Wänden vom Rand her bogenförmig einschneidende Ausnehmungen 16,18 auf.

Auch die untere Kastenhälfe 12 weist in zwei einander gegenüberliegenden Wandflächen bogenförmige Ausnehmungen 20,22 auf. Die Ausnehmungen 16,18,20,22 sind in geometrischer Hinsicht Halbkreise mit einem Durchmesser, der etwas kürzer ist als die jeweilige Seitenlänge des Würfels, wie in der Zeichnung der Fig. 1 unmittelbar zu erkennen ist. Die Ausnehmungen befinden sich aber jeweils in der Mitte des entsprechenden Seitenrandes, so dass beiderseits der Ausnehmungen an den vier Ecken des Würfels Eckflächen 24,26,28 verbleiben.

In der in Fig. 1 oben gezeigten Fläche der ersten Kastenhälfte 10 befindet sich mit Abstand zu den jeweiligen Rändern ein quadratischer Ausschnitt 30, in dessen Randlinie ein Falz 32 eingearbeitet ist, wie die in Fig. 2 dargestellte Explosionszeichnung zeigt. Dieser Falz 32 ermöglicht es, einen entsprechend geformten, quadratischen, flachen Deckel 34 zum Verschließen des Ausschnitts 30 in den Falz einzulegen. In dem Deckel 34 befindet sich in der Nähe einer Ecke ein Fingerloch 36, in das hineingegriffen werden kann, wenn der Deckel angehoben werden soll.

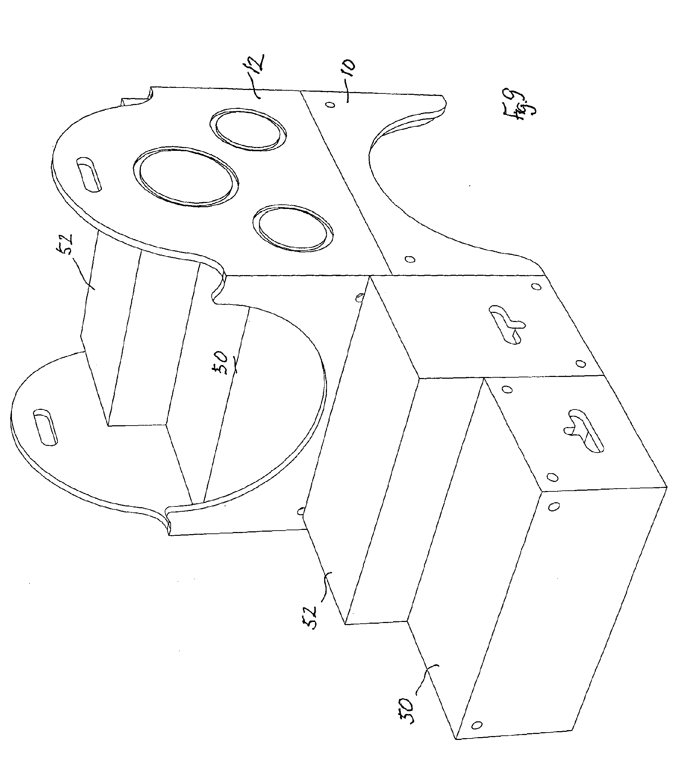

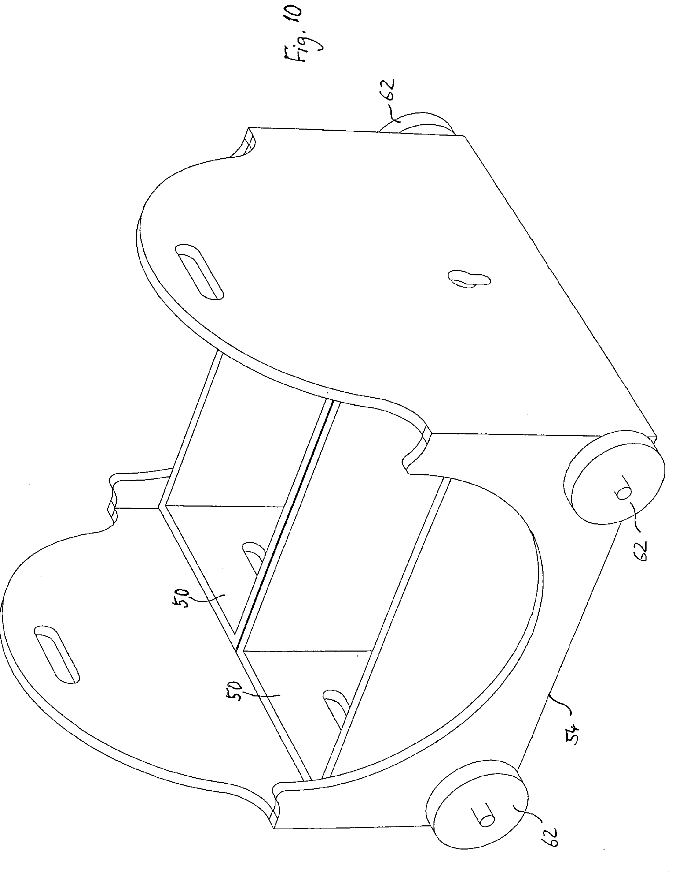

Wie in den Fig. 11 und 12 zu sehen ist, weist der Deckel 34 auf seiner Unterseite eine labyrinthartig verlaufende Nut 37 auf, die in den Deckel 34 eingefräst ist. Im herausgenommenen Zustand kann der Deckel 34 damit als Kugellabyrinth verwendet werden, indem in die Nut eine Kugel eingesetzt wird. Das Fingerloch 36 des Deckels 34 kann das Ende und damit das Ziel dieses Labyrinths darstellen. Damit weist der Deckel 34 eine eigenständige Spielfunktion auf.

Anschließend soll die zweite, in Fig. 1 und 2 untere Kastenhälfte 12 erläutert werden. Dabei soll insbesondere auf Fig. 2 Bezug genommen werden.

An zwei einander gegenüberliegenden Seitenflächen gehen von den Rändern der Seitenflächen bogenförmige Vorsprünge 38,40 aus, deren Form komplementär zu den Ausnehmungen 16,18 ist, so dass die zusammengesetzten Kastenhälften, wie Fig. 1 veranschaulicht, geschlossene Wandflächen bilden. Die bogenförmigen Vorsprünge 38,40 können im äußeren Endbereich Handgrifföffnungen 42,44 aufweisen. Die beiden anderen gegenüberliegenden Seitenflächen der zweiten, unteren Kastenhälfte 12 weisen bogenförmige Ausnehmungen 36,38 auf, die in ihrer Geometrie im wesentlichen den Ausnehmungen 16,18 der ersten, oberen Kastenhälfte 10 entsprechen. Die zuvor erwähnten Eckflächen 24,26,28 der oberen Kastenhälfte sind an ihren Enden ausgerundet, und die entsprechenden Gegenflächen der zweiten unteren Kastenhälfte sind entsprechend ausgekehlt, so dass auch die beiden Kastenhälften insoweit ohne Zwischenraum ineinander gefügt werden können.

Fig. 1 zeigt im übrigen andeutungsweise zwei quaderförmige Kästen 50 und 52 unterschiedlicher Höhe, die, übereinander gestellt, die innere Höhe der kastenförmigen Spielbox vollständig ausfüllen. Insgesamt sind vier derartige Kästen vorgesehen, die wiederum auch in der Breite nebeneinander die innere Breite der Spielbox ausfüllen. Die vier aufeinander und nebeneinander gestellten Kästen 50, 52 füllen also den Innenraum vollständig. Es handelt sich um offene, quaderförmige Kästen, die aus dem Inneren der Box entnommen werden und in verschiedener Weise zu Spielzwecken verwendet werden können.

Gemäß Fig. 2 befindet sich auf der Außenseite einer der Seitenwände der zweiten, unteren Kastenhälfte eine Anzahl von ringförmigen Markierungen. Wenn die zweite Kastenhälfte 12 so aufgestellt wird, dass die Markierungen oben liegen, stellen sie Kochplatten dar, die eine Verwendung der zweiten Kastenhälfte 12 als Kochherd für Spielzwecke ermöglicht.

Im folgenden soll an einer Reihe von Beispielen die Verwendung der erfindungsgemäßen Spielbox-Elemente für Spielzwecke erläutert werden.

Fig. 3 zeigt in perspektivischer Darstellung die erste Kastenhälfte 10 als Tisch und die beiden Kästen 50 als Bänke zur Bildung einer für Spielzwecke geeigneten Sitzgruppe.

Fig. 4 veranschaulicht, wie aus den Teilen des Spielbox-Satzes ein Kasperle-Theater gebildet werden kann. Die beiden Kastenteile 10 und 12 ergeben aufeinandergestellt die Bühne des Kasperle-Theaters, während die vier Kästen 50 und 52 in unterschiedliche Höhe als Sitzbänke eingesetzt sind. In Fig. 4 und allen folgenden Zeichnungen werden die bereits in Fig. 1 und 2 eingesetzten Bezugsziffern verwendet, so dass in jedem Falle der Zusammenhang mit Fig. 1 und 2 und dem geschlossenen Kasten hergestellt werden kann.

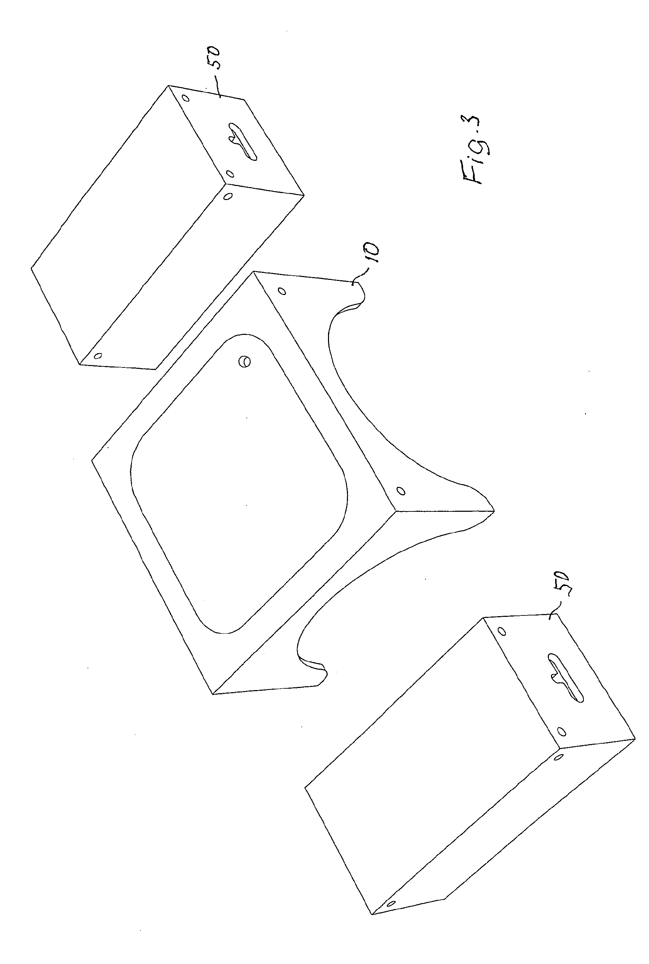

Gemäß Fig. 5 ist ein Kaufmannsladen gebildet worden aus den aufeinander gestellten Kästen 52 mit dem Betrachter zugewandter offener Seite als untere Warenregale und die beiden tieferen Kästen 50 als obere Warenregale und gegebenenfalls einem vor die oberen Regale in der dargestellten Weise gesetzte erste Kastenhälfte 10, durch deren Öffnung oder Ausschnitt in das Innere der beiden oben stehenden Kästen 50 hineingeblickt werden kann. Die zweite Kastenhälfte 12 bildet in der dargestellten Position die Ladentheke.

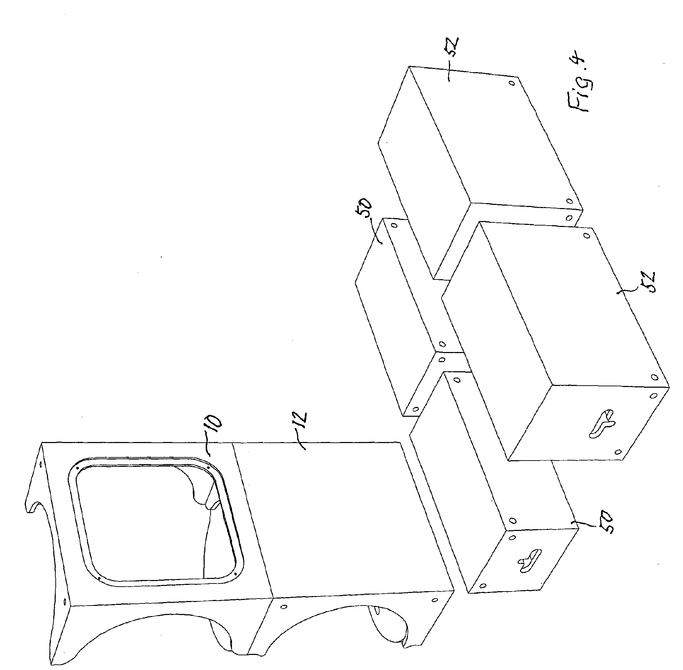

Fig. 6 ist eine weitere perspektivische Darstellung der beiden aufeinander gestellten Kastenhälften 10 und 12. Die erste Kastenhälfte 10 befindet sich in der Position, in der sie in Fig. 3 als Tisch dient, während die zweite Kastenhälfte 12 auf dieser mit nach oben gewandter offener Seite steht. Es entsteht der optische Eindruck eines erhöhten Bettes, das beispielsweise als Puppenbett benutzt werden kann.

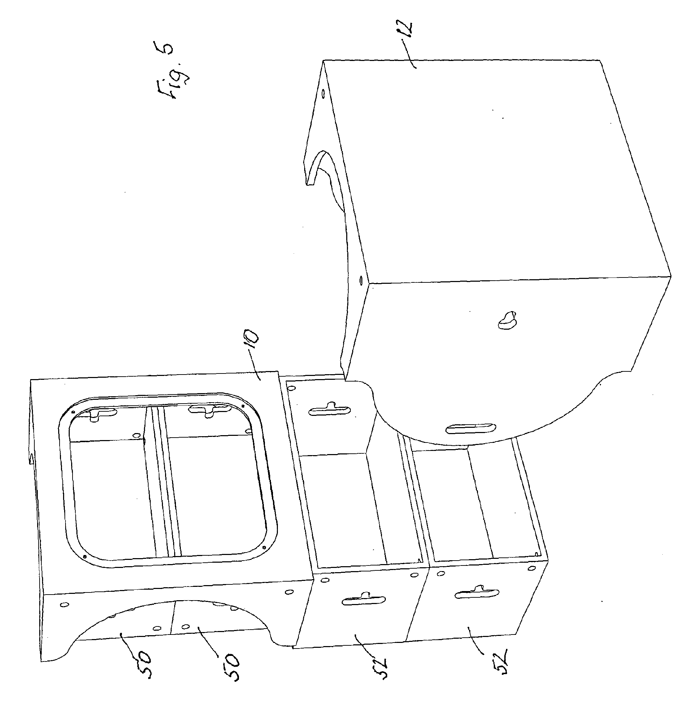

In Fig. 7 ist aus der ersten Kastenhälfte 10 und dem in diese hineingesetzten zweiten Kasten 52 eine Schulbank gebildet worden, während die auf die Seitenfläche gestellte zweite Kastenhälfte 12 in der dargestellten Art und Weise ein Schulpult bilden soll.

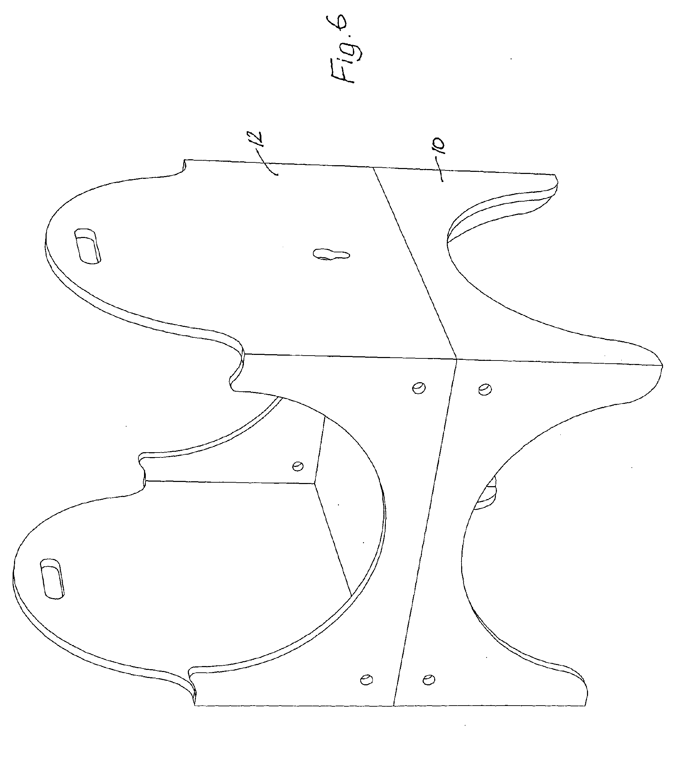

In Fig. 8 ist aus der zweiten Kastenhälfte 12, die wiederum auf eine der Seitenwände gelegt worden ist, und den beiden Kästen 50 und 52, die in der dargestellten Art und Weise in die offene Seite der zweiten Kastenhälfte 12 hineingesetzt worden sind, ein Puppenherd gebildet worden. Die kreisförmigen Markierungen, auf die oben hingewiesen worden ist, bilden die Kochplatten.

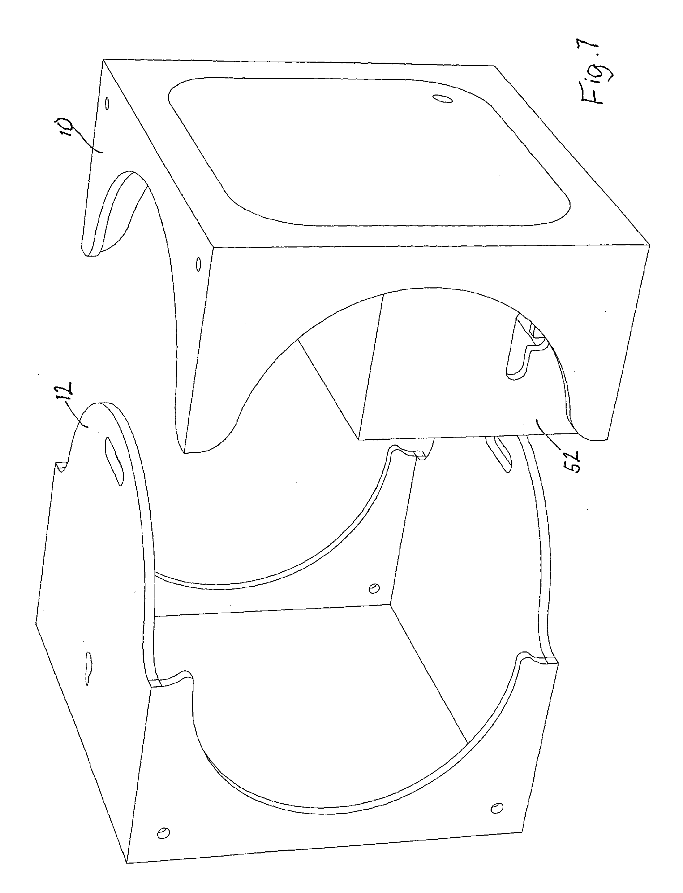

Fig. 9 zeigt eine aus den Kästen 50 und 52 sowie den Kastenhälften 10 und 12 gebildete Treppe.

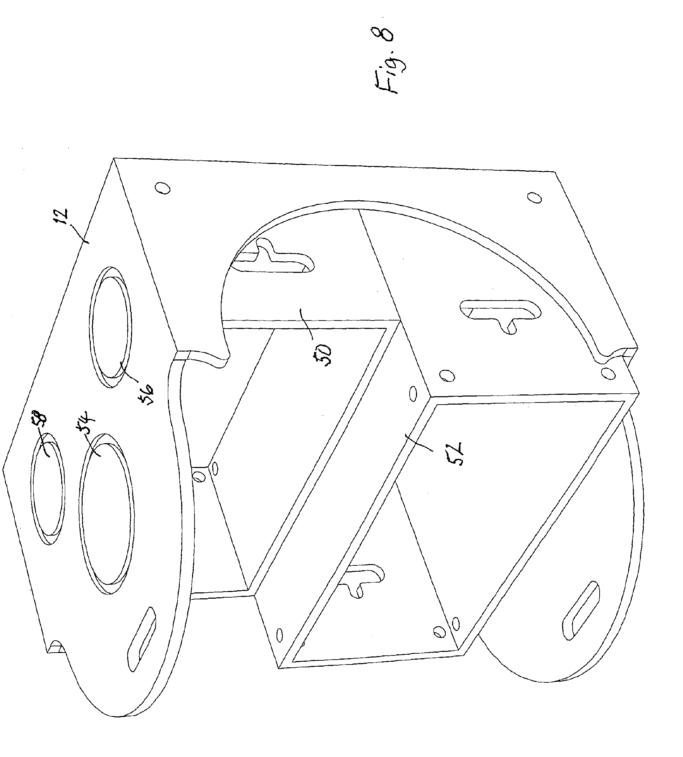

In Fig. 10 ist die zweite Kastenhälfte 12 mit nach oben offener Seite auf den Boden gelegt gezeigt, und die zweite Kastenhälfte 12 sind die Kästen 50 oder 52 hineingelegt worden. Diese Anordnung könnte einen Zwillings-Kinderwagen oder ein Zwillings-Doppelbett verkörpern.

Gemäß Fig. 10 ist die zweite Kastenhälfte 12 an zwei gegenüberliegenden Kanten 54 im Bodenbereich mit Rollen 62 versehen, die es ermöglichen, die gesamte Kastenanordnung zu schieben. Solche Rollen 62 können fest an der Kastenhälfte 12 montiert oder auch abnehmbar angeordnet sein. Solche abnehmbaren Rollen 62 sollen anhand der folgenden Figuren dargestellt werden.

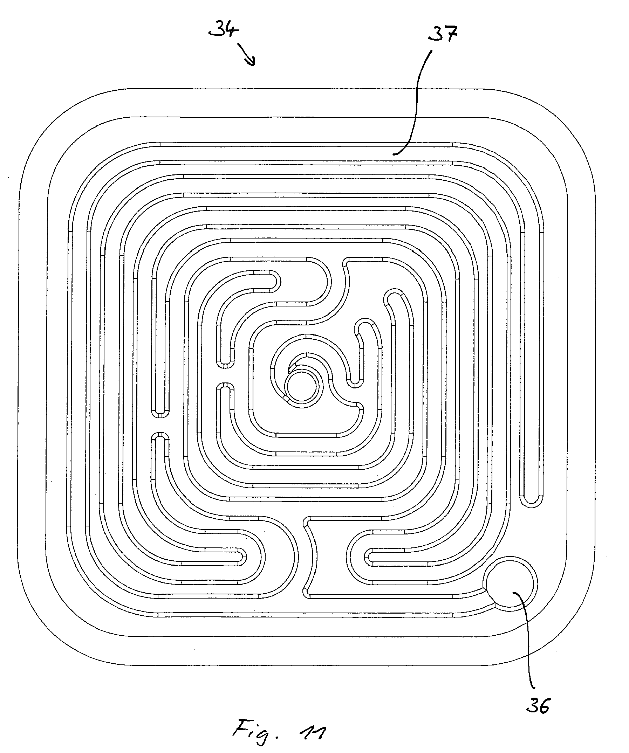

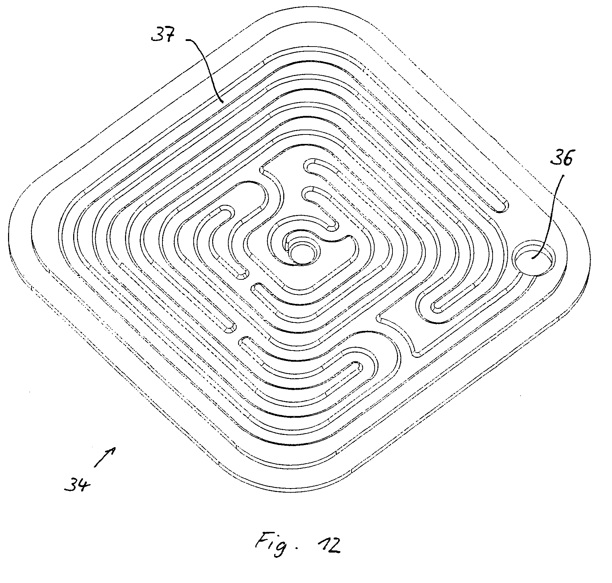

Fig. 13 zeigt eine Rolleneinheit 60, die eine Rolle 62 und einen Lagerbock 64 zur Lagerung der Rolle 62 umfaßt. Der Lagerbock 64 hat einen etwa L-förmigen Querschnitt mit zwei Schenkeln 66,68, von denen ein erster Schenkel 66 plattenförmig ausgebildet ist und zu der Seite des Lagerbocks 64 weist, die der Rolle 62 abgewandt ist, während der dazu senkrechte zweite Schenkel 68 eine größere Dicke aufweist und in seinem Endbereich ein Lager 70 umfaßt, in welchem die Drehachse 72 der Rolle 62 einliegt. Die Drehachse 72 erstreckt sich parallel zur Ebene des plattenförmigen ersten Schenkels 66 und senkrecht zu der Erstreckungsrichtung des zweiten Schenkels 68, in dessen Lager 70 sie einliegt. An der flachen Innenseite des zweiten Schenkels 68, die der Rolle 62 abgewandt ist, ragt ein freies Ende der Drehachse 72 heraus, während die Rolle 62 selbst an der gegenüberliegenden Seite dieses Schenkels 68 flach anliegt. Diese Anordnung ist auch in der Seitenansicht in Fig. 14 deutlich zu erkennen.

Auf der Oberseite des plattenförmigen ersten Schenkels 66 ragen zwei Zapfen 74 auf, die mit dem Lagerbock 64 einstückig ausgeformt sind.

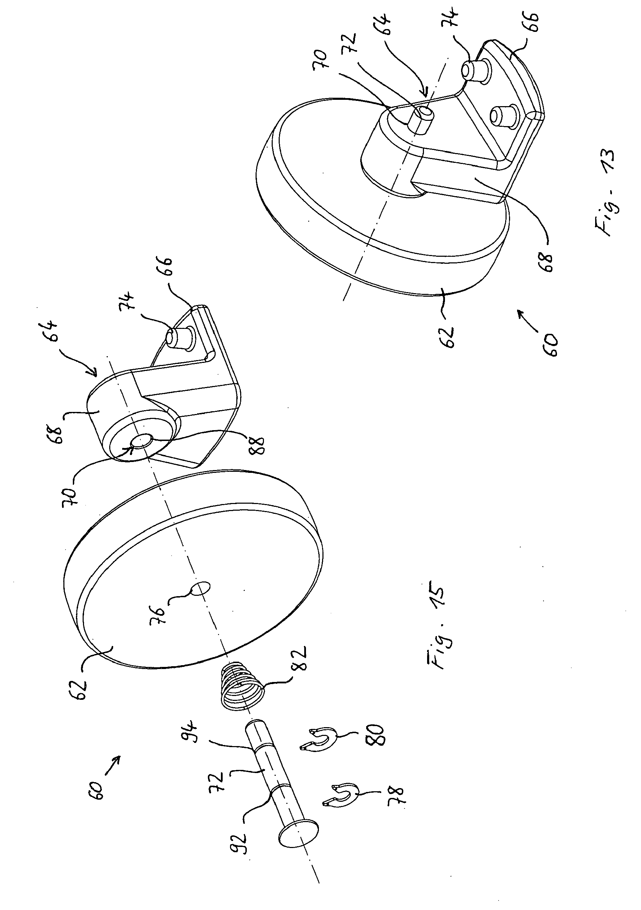

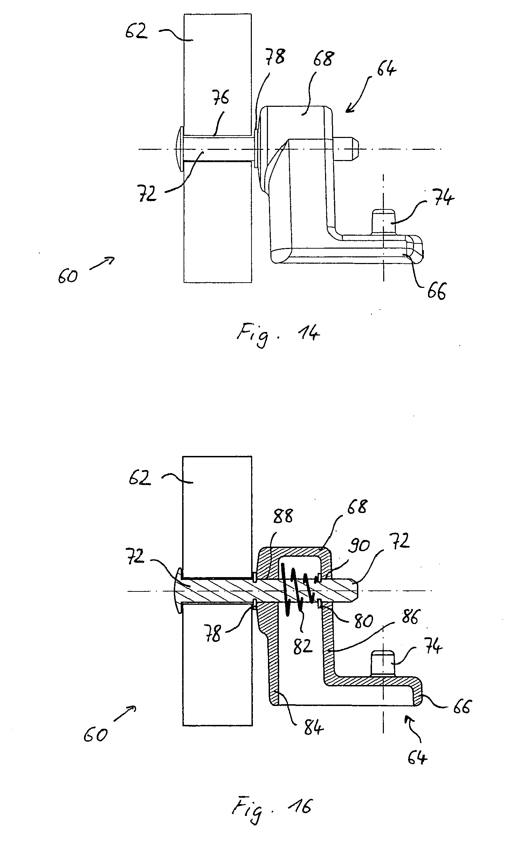

Wie in der Explosionsdarstellung in Fig. 15 zu sehen ist, ist die Drehachse 72 als Steckachse aus Metall ausgebildet, die in ein entsprechendes Loch 76 in der Mittelachse der Rolle 62 einsteckbar ist. Ferner umfaßt die Rolleneinheit 60 Mittel zur Anordnung und Befestigung der Drehachse 72, die zwei Sprengringe 78,80 und eine kegelstumpfförmig zulaufende Schraubenfeder 82 umfassen. Die Anordnung dieser Elemente im montierten Zustand ist in dem schematischen Schnitt in Fig. 16 gezeigt.

In Fig. 16 ist zu erkennen, dass der Lagerbock 64 hohl ausgebildet ist. Insbesondere umfaßt der aufragende zweite Schenkel 68 zwei parallele Außenwände 84,86, die jeweils mit einem Loch 88,90 versehen sind. Die beiden Löcher 88,90 sind derart auf einer Achse angeordnet, dass sich die Drehachse 72 durchstecken läßt. Die beiden Löcher 88,90 im zweiten Schenkel 68 bilden somit das Lager 70 zur Aufnahme der Drehachse 72.

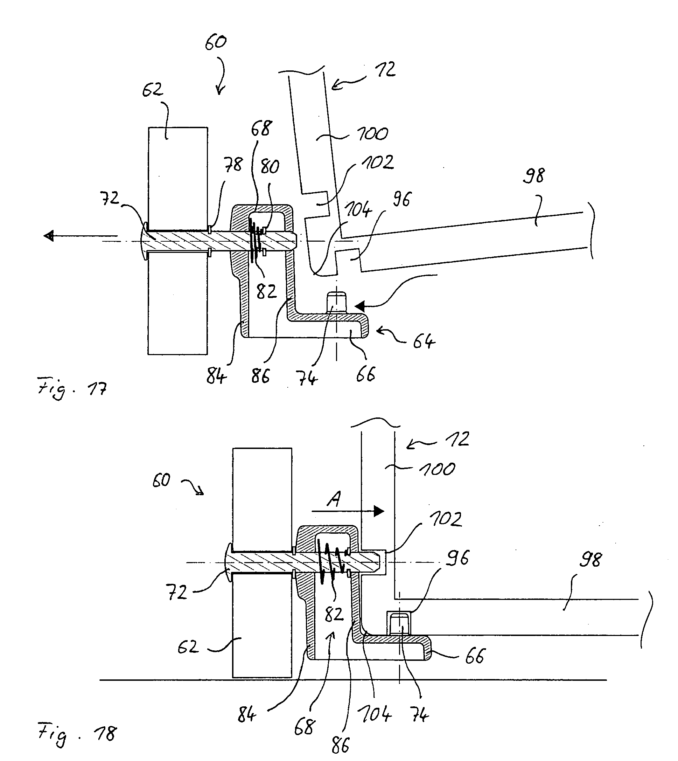

Wie in Fig. 15 zu sehen ist, ist die Drehachse 72 mit zwei kreisförmig umlaufenden, axial voneinander beabstandeten Nuten 92,94 versehen. Diese Nuten 92,94 dienen zur Aufnahme der Sprengringe 78,80, die sich durch geringfügiges Spreizen auf den Umfang der Drehachse 72 aufstecken lassen und durch ihre Federkraft sicher in den Nuten gehalten werden. Gemäß Fig. 16 liegt in der montierten Stellung der erste der beiden Sprengringe 78 zwischen der der Rolle zugewandten Außenwand 84 des zweiten Schenkels 68 und der Rolle 62 selbst ein, so dass die Rolle 62 von der der Rolle 62 zugewandten Seite des Schenkels 68 leicht beabstandet ist und somit die Reibung bei der Drehung der Rolle 62 minimiert wird. Der zweite Sprengring 80 liegt an der Innenwand 86 des zweiten Schenkels 68 an, die der Rolle 62 abgewandt ist. Zwischen dem zweiten Sprengring 80 innerhalb des zweiten Schenkels 68 und der der Rolle zugewandten Außenwand 84 liegt die Schraubenfeder 82 ein. Die Schraubenfeder 82 kann dabei geringfügig in axialer Richtung komprimiert sein und spannt durch den Druck gegen den zweiten Spannring 80 die Drehachse 72 mitsamt der Rolle 62 in der Richtung der Seite der zweiten Schenkels 68 vor, die der Rolle 62 abgewandt ist. Hierdurch wird die Rolle 62 gegen den zweiten Schenkel 68 geringfügig angedrückt. Innerhalb des Lagers 70 ist die Drehachse 72 jedoch axial verschiebbar und kann gegen den Druck der Feder 82 geringfügig vom zweiten Schenkel 68 abgezogen werden. Diese Situation ist in Fig. 17 dargestellt.

Durch dieses Herausziehen gegen die Federspannung wird das freie Ende der Drehachse 72 in den zweiten Schenkel 68 eingezogen. In dieser Situation ist es möglich, die Rolleneinheit 60 an einem Kantenbereich einer Kastenhälfte 12 anzubringen, indem zunächst die Zapfen 74 in entsprechende Ausnehmungen 96 in einer Bodenseite 98 der unteren Kastenhälfte 12 eingesetzt werden, so dass der erste Schenkel 66 flach an dieser Bodenseite 98 anliegt. Dann liegt auch die zu der Bodenfläche 98 senkrechte Seitenwand 100 der Kastenhälfte 12 am zweiten Schenkel 68 an, und die Drehachse 72 kann in eine entsprechend angeordnete Ausnehmung 102 in der Seitenwand 100 gleiten, wie in Fig. 18 durch einen Pfeil A dargestellt ist. Die in den Ausnehmungen 96 an der Unterseite der Kastenhälfte einliegenden Zapfen 74 und das aus dem zweiten Schenkel 68 herausragende freie Ende der Drehachse 72, das in der Ausnehmung 102 in der Seitenwand 100 einliegt, halten die Rolleneinheit 60 fest an der Kante 104 der Kastenhälfte 12, die die Bodenfläche 68 von der Seitenwand 100 trennt. Auf diese Weise können beispielsweise vier Rolleneinheiten 60 an zwei gegenüberliegenden unteren Kanten 104 der Kastenhälfte 12 angebracht sein, so dass sich die in Fig. 10 gezeigte Anordnung ergibt. Die Kastenhälfte 12 ist dann linear verschiebbar und kann in ihrer Spielfunktion beispielsweise ein Auto, einen Kinderwagen oder dergleichen repräsentieren.

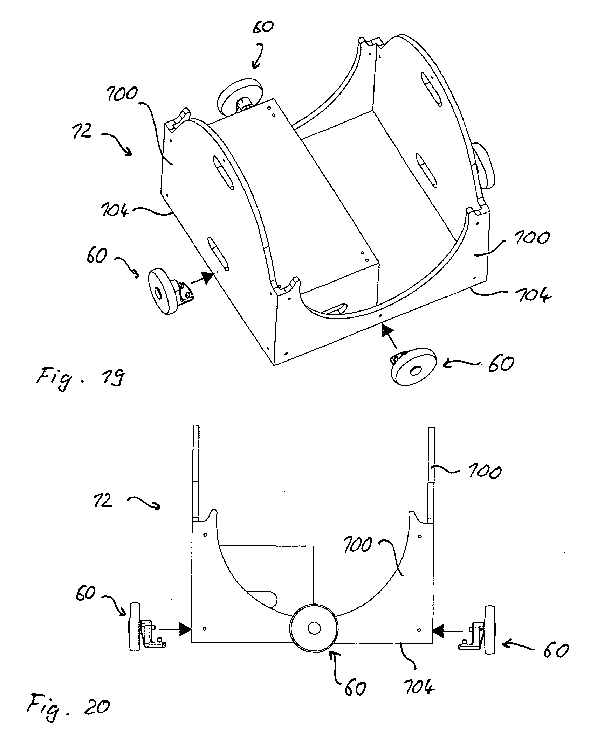

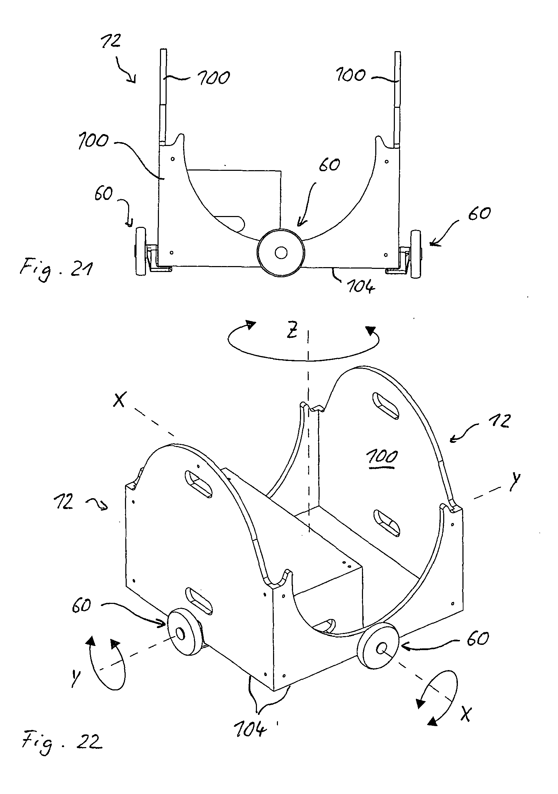

Die Kastenhälfte 12 kann an ihren Kantenbereichen mit einer größeren Anzahl von Ausnehmungen versehen sein, die es gestatten, Rolleneinheiten 60 an unterschiedlichen Stellen anzubringen. Beispielsweise zeigt Fig. 19 eine Anordnung von Rolleneinheiten 60 an der unteren Kastenhälfte 12 zur Bildung eines Karussells, bei welchem die Kastenhälfte 12 um eine senkrechte Achse Z (siehe Fig. 22) rotierbar ist, die senkrecht zum Untergrund steht. Hierbei wird jeweils eine Rolleneinheit 60 an der Mitte jeder unteren Außenkante 104 der Kastenhälfte 12 auf die Art und Weise angebracht, die in den Fig. 16 bis 18 beschrieben wurde. Jeweils zwei Rolleneinheiten 60 sind dann an gegenüberliegenden Kanten 104 derart angeordnet, dass deren Rollen 62 sich um eine gemeinsame Achse X,Y drehen (Fig. 20). Da die zwei Achsen X,Y der insgesamt vier Rollen 62 senkrecht zueinander stehen, ergibt sich die gewünschte Drehbarkeit um die dazu senkrechte Raumachse Z. Einzelheiten zur Anbringung der Rolleneinheiten 60 sind in den Fig. 20 und 21 dargestellt.

## Patentansprüche

1. Spielbox-Satz in der Form eines im wesentlichen würfelförmigen Kastens, der aus zwei offenen Kastenhälften (10,12) zusammengesetzt ist, bei denen bei der ersten Kastenhälfte (10) die Seitenwände vom Rand her bogenförmig ausgespart sind, während bei der zweiten Kastenhälfte (12) zwei gegenüberliegende Seitenwände bogenförmig vorspringend ausgeführt sind, derart, dass beim Zusammensetzen der Kastenhälften (10,12) die bogenförmigen Ausnehmungen (16,18,20,22) und Vorsprünge (39,40) einander ergänzen.

2. Spielbox-Satz nach Anspruch 1, **dadurch gekennzeichnet, dass** der Radius der bogenförmigen Ausnehmungen und Vorsprünge kleiner ist als die halbe Seitenlänge der Kastenhälften.

3. Spielbox-Satz nach Anspruch 1 oder 2, **dadurch gekennzeichnet, dass** der Boden der die bogenförmigen Ausnehmungen aufweisenden ersten Kastenhälfte (10) einen in Abstand zu den Rändern verlaufenden Ausschnitt (30) aufweist, der durch einen einlegbaren Deckel (34) verschließbar ist.

4. Spielbox-Satz nach Anspruch 3, **dadurch gekennzeichnet, dass** der Deckel (34) auf einer seiner Seiten eine labyrinthartig verlaufende Nut (37) aufweist.

5. Spielbox-Satz nach einem der vorhergehenden Ansprüche, **dadurch gekennzeichnet, dass** der Spielbox-Satz vier im Inneren des Kastens auf- und nebeneinander stapelbare offene Kästen (50,52) umfaßt.

6. Spielbox-Satz nach einem der vorhergehenden Ansprüche, **dadurch gekennzeichnet, dass** auf der Außenfläche einer mit einem Vorsprung versehenen Seite der zweiten Kastenhälfte (12) kreisförmige Markierungen (52, 56, 58) vorgesehen sind.

7. Spielbox-Satz nach einem der vorhergehenden Ansprüche, **dadurch gekennzeichnet, dass** an der zweiten Kastenhälfte (12) an zwei einander gegenüberliegenden Seitenwänden, die sich zwischen den Vorsprüngen (39,40) befinden, bogenförmige Ausnehmungen (36,38) vorgesehen sind, die den Ausnehmungen der ersten Kastenhälfte entsprechen.

8. Spielbox-Satz nach einem der vorhergehenden Ansprüche, **dadurch gekennzeichnet, dass** eine der beiden Kastenhälften (12) an zumindest zwei gegenüberliegenden Kantenbereichen mit Rollen (62) versehen ist.

9. Spielbox-Satz nach Anspruch 8, **dadurch gekennzeichnet, dass** die Rollen (62) abnehmbar an den Kantenbereichen angebracht sind.

10. Spielbox-Satz nach Anspruch 9, **dadurch gekennzeichnet, dass** jeweils eine Rolle (62) drehbar in einem Lagerbock (64) gehalten wird, der einen etwa L-förmigen Querschnitt mit zwei Schenkeln (66,68) aufweist, von denen ein erster Schenkel (66) plattenförmig ausgebildet ist und zu der der Rolle (62) abgewandten Seite des Lagerbocks (64) weist und der zweite Schenkel (68) ein Lager (70) umfasst, in welchem die Drehachse (72) der Rolle (62) einliegt.

11. Spielbox-Satz nach Anspruch 10, **dadurch gekennzeichnet, dass** die Drehachse (72) sich senkrecht zur Erstreckungsrichtung des zweiten Schenkels (68) durch diesen hindurch erstreckt und im Lager (70) axial verschiebbar einliegt, und dass das Lager (70) ein Federelement (82) umfasst, das die Drehachse (72) in Richtung der der Rolle (62) abgewandten Seite des zweiten Schenkels (68) vorspannt.

12. Spielbox-Satz nach Anspruch 11, **dadurch gekennzeichnet, dass** auf dem plattenförmigen ersten Schenkel (66) mindestens ein Zapfen (74) aufragt.
